# EUROPÄISCHE PATENTSCHRIFT

(11) **EP 1 496 215 B1**
(45) Veröffentlichungstag und Bekanntmachung des Hinweises auf die Patenterteilung: **23.08.2006**
(21) Anmeldenummer: 04014707.6
(22) Anmeldetag: 22.06.2004
(51) Int. Cl.: F02B 37/10, F02B 39/10, F02B 37/00, F01L 1/46, F01L 9/04

(54) **Verfahren zum Antreiben eines Turboladers**
Method for driving a turbocharger
Méthode d'entraînement d' un turbocompresseur

(30) Priorität: 11.07.2003 DE 10332042
(43) Veröffentlichungstag der Anmeldung: 12.01.2005
(73) Patentinhaber: Bayerische Motoren Werke Aktiengesellschaft, 80809 München (DE)
(72) Erfinder: Kragl, Rudolf, 85406 Zolling (DE); Meyer, Johannes, 85757 Karlsfeld (DE)

(56) Entgegenhaltungen:
- EP-A- 0 217 537
- DE-A- 19 518 317
- US-A- 5 373 827
- US-A- 6 158 403

## Beschreibung

Die Erfindung bezieht sich auf ein Verfahren zum Antreiben eines Turboladers nach dem Oberbegriff des Patentanspruchs 1.

Brennkraftmaschinen mit Turboladern sind in der Kraftfahrzeug- und Schwerlastwagenindustrie seit langem bekannt. Typische Turbolader nutzen Abgasenergie (Abgas-Turbolader), um Ansaugluft in der Brennkraftmaschine zu verdichten. Eine solche Vorverdichtung führt zu einer erhöhten Motorleistung gegenüber herkömmlichen Brennkraftmaschinen. Allerdings besteht bei derartig aufgeladenen Brennkraftmaschinen das Problem des sog. Turbolochs, das insbesondere beim Anfahren und Beschleunigen aus niedrigen Drehzahlen des Fahrzeuges, also wenn die Brennkraftmaschine rasch in Bereiche höherer Leistung beschleunigt werden soll, auftritt. Hierbei liegt zu wenig Luft am Ansaugtrakt vor.

Zur Vermeidung dieses Turbolochs sind schon verschiedene Lösungen vorgeschlagen worden, z. B. das Verwenden einer elektrischen Maschine. So offenbart die EP 0 217 537 A1 einen Turbolader, der eine rotierende Welle aufweist, an der eine elektrische Maschine angebracht ist. Alternativ arbeitet die elektrische Maschine entweder als Elektromotor zur Minimierung des Turbolochs oder als ein Generator. Die elektrische Maschine wird so angesteuert, dass sie als Elektromotor oder Generator auf der Grundlage eines Signals, das ein Maß für die Last der Brennkraftmaschine ist, und auf der Grundlage eines weiteren Signals, das ein Maß für die Drehgeschwindigkeit ist, arbeitet.

Gemäß der genannten Offenlegungsschrift wird die rotierende elektrische Maschine als Generator betrieben, und die erzeugte Energie wird benutzt, um eine Batterie zu laden, wenn die Brennkraftmaschine einer Teillast unterworfen ist. Wenn die Brennkraftmaschine bei einer geringen Fahrzeuggeschwindigkeit läuft, während sie unter hoher Last bzw. Drehzahl betrieben wird, wird die in der Batterie gespeicherte elektrische Energie von der Batterie zur elektrischen Maschine geliefert, um letztere als Elektromotor zu betreiben.

Aufgabe der Erfindung ist, ein Verfahren anzugeben, bei dem die erzeugte Energie auf eine andere Weise genutzt werden kann.

Diese Aufgabe wird erfindungsgemäß durch ein Antriebssystem nach Patentanspruch 1 gelöst.

Das erfindungsgemäße Verfahren zum Antreiben eines Turboladers, der an einer Brennkraftmaschine in einem Kraftfahrzeug angebracht ist, mittels einer elektrischen Maschine, die an einer rotierenden Welle des Turboladers angebracht ist und abhängig von vorgegebenen ersten Betriebsparametern der Brennkraftmaschine in Form eines Elektromotors elektrische Energie zum Antreiben der rotierenden Welle abgibt, und abhängig von vorgegebenen zweiten Betriebsparametern der Brennkraftmaschine in Form eines Generators von der rotierenden Welle mechanische Rotations-Energie aufnimmt und in elektrische Energie wandelt, zeichnet sich dadurch aus, dass die von der elektrischen Maschine gewandelte elektrische Energie zur Steuerung und/oder Regelung der Stell-Aktuatoren eines elektromagnetischen Ventiltriebs der Brennkraftmaschine verwendet wird.

Wie bereits erwähnt, wird zur Reduzierung eines Turbolochs, das z. B. bei einem Übergang von einer Niedrig-Last-Anforderung auf eine Volllast-Anforderung der Brennkraftmaschine eintritt, eine elektrische Maschine verwendet. Vorgegebene erste Betriebsparameter sind bspw. ein Unterschreiten einer ersten Drehzahlschwelle und/oder ein Überschreiten einer ersten Lastanforderungsschwelle der Brennkraftmaschine. Wird anhand der Betriebsparameter erkannt, dass eine Drehmomenterhöhung erforderlich ist und der Turbolader alleine diese Drehmomenterhöhung nicht aufbringen kann, wird eine elektrische Maschine verwendet. Die an der rotierenden Welle angebrachte elektrische Maschine wendet elektrische Energie auf, um die rotierenden Welle des Turboladers zu beschleunigen. Kann der Turbolader wieder aus eigener Kraft das Drehmoment zur Verfügung stellen, d. h. die Lastanforderung ist sehr gering und die Drehzahl der Brennkraftmaschine in einem höheren Bereich, arbeitet die elektrische Maschine nicht mehr in Form eines Elektromotors sondern abhängig von vorgegebenen zweiten Betriebsparameter in Form eines Generators. Vorgegebene zweite Betriebsparameter sind bspw. ein Überschreiten einer zweiten Drehzahlgeschwindigkeitsschwelle und/oder ein Unterschreiten einer zweiten Lastanforderungsschwelle der Brennkraftmaschine. Der Generator wandelt die Rotationsenergie der drehenden Welle in elektrische Energie.

Erfindungsgemäß wird diese gewandelte elektrische Energie zur Steuerung und/oder Regelung der Stell-Aktuatoren eines elektromagnetischen Ventiltriebs der Brennkraftmaschine verwendet. Diese Anwendung ist besonders geeignet, da die gewandelte Energie nicht in ein Speichermedium abfließt, sondern gleich zur Steuerung verwendet werden kann, da die Steuerung bzw. Regelung der Stell-Aktuatoren dieses elektromagnetischen Ventiltriebs ein immer wiederkehrender Prozess ist. Die erhöhte Stromaufnahme am Stell-Aktuator der elektromagnetischen Ventile kann mit herkömmlichen E-nergieversorgungssystemen oft nicht umgesetzt werden. Es wären deshalb zusätzliche Energieerzeuger nötig, die im Gegensatz zu konventionellen E-nergieversorgungssystemen im Fahrzeug anstatt 12V eine Spannung von bspw. 42V zur Verfügung stellen. Die Verwendung der gewandelten elektrischen Energie aus dem Generator zum Bewegen bzw. Öffnen der Auslassventile ist aus diesem Grund besonders geeignet, da sie 42V zur Verfügung stellen kann.

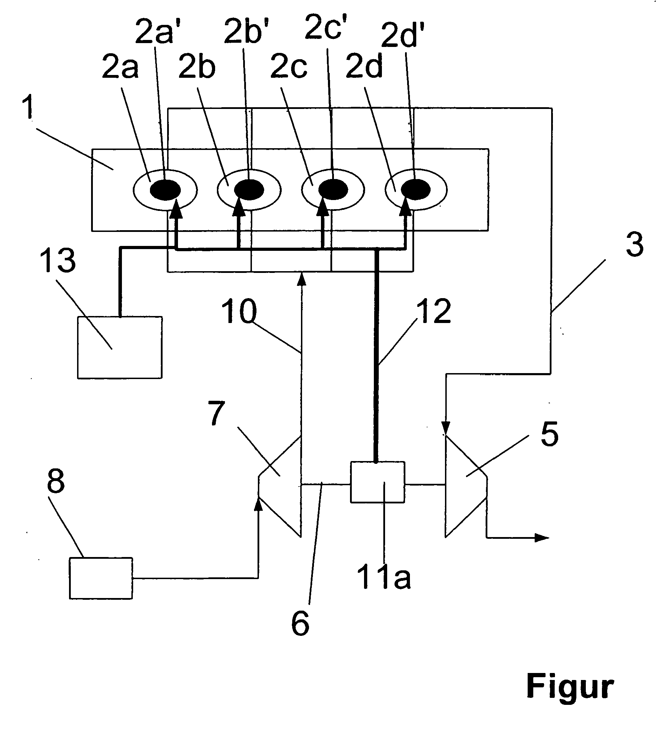

In der Zeichnung ist ein Ausführungsbeispiel der Erfindung dargestellt. Die einzige Figur zeigt einen Turbolader mit elektrischer Maschine, die die in Form eines Generators gewandelte elektrische Energie zum Ansteuern von Stell-Aktuatoren elektromagnetischer Ventile benutzt.

Die einzige Figur zeigt einen Turbolader mit einer elektrischen Maschine 11 a. Von einer Brennkraftmaschine 1 gelangen von den 4 Zylindern 2a, 2b, 2c und 2d, deren Ventile 2a', 2b', 2c' und 2d' elektromagnetisch gesteuert werden, die Abgase durch einen Abgastrakt 3 zu einem ersten Schaufelrad 5 im Abgastrakt 3 eines Turboladers. Durch die Abgase wird das erste Schaufelrad 5 im Abgastrakt 3 in eine rotierende Bewegung versetzt. Mit dem ersten Schaufelrad 5 im Abgastrakt 3 ist eine rotierende Welle 6 fest verbunden, an der eine elektrische Maschine 11a angebracht ist. Weiter ist die rotierende Welle 6 mit einem zweiten Schaufelrad 7 im Ansaugtrakt 10 fest verbunden. Solange der Elektromotor 11a außer Betrieb ist, dreht sich das erste Schaufelrad 5 im Abgastrakt 3 umso schneller, je mehr Abgase im Abgastrakt 3 sind. Gleichzeitig dreht sich das mit dem ersten Schaufelrad 5 über die rotierenden Welle 6 verbundene zweite Schaufelrad 7 im Ansaugtrakt 10 ebenfalls schneller. Die Luft im Ansaugtrakt 10, die zu Beginn in einem Luftfilter 8 gereinigt wird, wird stärker verdichtet, wodurch eine bessere Verbrennung des Luftgas-Gemisches in der Brennkraftmaschine 1 vorgenommen werden kann. Reicht der Abgasstrom für eine schnellere Rotation der Schaufelräder 5 und 7 nicht aus, treibt der Elektromotor 11a abhängig von vorgegebenen ersten Betriebsparametern zusätzlich die rotierende Welle 7 an, wodurch sich das zweite Schaufelrad 7 im Ansaugtrakt ebenfalls schneller dreht und dadurch eine größere Luftverdichtung im Ansaugtrakt 10 entsteht.

Wird die elektrische Maschine 11a nicht mehr zur Erhöhung der Rotationsgeschwindigkeit der rotierenden Welle 6 benötigt, sind also vorgegebene zweite Betriebsparameter der Brennkraftmaschine 1 erfüllt, nimmt die elektrische Maschine 11a in Form eines Generators von der rotierenden Welle 6 mechanische Rotationsenergie auf und wandelt sie in elektrische Energie um, um damit die Aktuatoren der elektromagnetischen Ventile 2a', 2b', 2c' und 2d' anzusteuern. Die gewandelte elektrische Energie der elektrischen Maschine 11a wird über eine Steuerleitung 12 direkt an die einzelnen Stell-Aktuatoren der elektromagnetischen Ventile 2a', 2b', 2c' und 2d' der Zylinder 2a, 2b, 2c und 2d in der Brennkraftmaschine 1 weitergegeben und dient dazu dient, die elektromagnetischen Ventile 2a', 2b', 2c' und 2d' zu bewegen. Steht keine elektrische Energie aus der elektrischen Maschine 11a zur Verfügung, da diese z. B. als Elektromotor arbeitet, übernimmt ein zusätzlicher Energieerzeuger 13 die Bewegung der elektromagnetischen Ventile 2a', 2b', 2c' und 2d'. Dieser kann aber unter Verwendung des erfindungsgemäßen Verfahrens wesentlich kleiner als bisher dimensioniert werden, da er nur zeitweise die Energie für die Bewegung der Ventile 2a', 2b', 2c' und 2d' liefert.

Es können eine Vielzahl weiterer Details durchaus abweichend von obiger Beschreibung gestaltet sein, ohne den Inhalt der Patentansprüche zu verlassen.

## Patentansprüche

1. Verfahren zum Antreiben eines Turboladers, der an einer Brennkraftmaschine (1) in einem Kraftfahrzeug angebracht ist, mittels einer elektrischen Maschine (11a) die an einer rotierenden Welle (6) des Turboladers angebracht ist und abhängig von vorgegebenen ersten Betriebsparametem der Brennkraftmaschine (1) in Form eines Elektromotor (11a) elektrische Energie zum Antreiben der rotierenden Welle (6) abgibt, und abhängig von vorgegebenen zweiten Betriebsparametern der Brennkraftmaschine in Form eines Generators von der rotierenden Welle (6) mechanische Rotations-Energie aufnimmt und in elektrische Energie wandelt, **dadurch gekennzeichnet, dass** die von der elektrischen Maschine (11a) gewandelte elektrische Energiegleich zur Steuerung und/oder Regelung der Stell-Aktuatoren eines elektromagnetischen Ventiltriebs (2a',2b',2c',2d') der Brennkraftmaschine (1) verwendet wird.

## Claims

1. A method of driving a turbocharger mounted on an internal combustion engine (1) in a motor vehicle, via an electric machine (11a) which is mounted on a rotating shaft (6) of the turbocharger and in the form of an electric motor (11 a) delivers electric energy for driving the rotating shaft (6) in dependence on a set first operating parameter of the engine (1) and in the form of a generator takes mechanical energy of rotation from the rotating shaft (6) and converts it into electric energy in dependence on a set second operating parameter of the engine, **characterised in that** the electric energy converted by the electric machine (11a) is used directly for open-loop and/or closed-loop control of the adjusting actuators of an electromagnetic valve drive (2a', 2b', 2c', 2d') on the engine (1).

## Revendications

1. Procédé pour entraîner un turbocompresseur disposé sur un moteur à combustion interne (1) dans un véhicule automobile au moyen d'une machine électrique (11a) disposée sur un arbre rotatif (6) du turbocompresseur et qui délivre en tant que moteur électrique (11a) de l'énergie électrique en fonction de premiers paramètres prédéfinis du moteur à combustion interne (1) pour entraîner l'arbre rotatif (6), et absorbe en tant que générateur de l'énergie de rotation mécanique de l'arbre rotatif (6) en fonction de deuxièmes paramètres prédéfinis du moteur à combustion interne et la convertit en énergie électrique,
**caractérisé en ce que**
l'énergie électrique convertie par la machine électrique (11a)est utilisée directement pour commander et/ou réguler les actionneurs de réglage de soupapes électromagnétiques (2a', 2b', 2c', 2d') du moteur à combustion interne (1).
